# FASCICULE DE BREVET EUROPEEN

(11) **EP 3 249 128 B1**
(45) Date de publication et mention de la délivrance du brevet: **08.01.2020**
(21) Numéro de dépôt: 17160144.6
(22) Date de dépôt: 09.03.2017
(51) Int. Cl.: E04B 5/38, E04G 15/06, E04B 5/48

(54) **PRÉDALLE À MOYENS DE REPÉRAGE DE CHEMINS DE GAINES ET PROCÉDÉ DE FABRICATION ASSOCIÉ**
ELEMENTPLATTE MIT ANZEIGEMITTELN DER KANALVERLÄUFE, UND ENTSPRECHENDES HERSTELLUNGSVERFAHREN
PRE-SLAB WITH MEANS FOR MARKING SLEEVE PATHS AND ASSOCIATED MANUFACTURING METHOD

(30) Priorité: 27.05.2016 FR 1654762
(43) Date de publication de la demande: 29.11.2017
(73) Titulaire: KP1, 84000 Avignon (FR)
(72) Inventeur: ABRIC, Laurent, 30150 MONFAUCON (FR); BENOIT, Yuraïma, 30133 LES ANGLES (FR); MAHE, Benjamin, 84700 Sorgues (FR); GARCIA, Richard, 30650 ROCHEFORT DU GARD (FR); HAOUR, Thierry, 30650 ROCHEFORT SUR GARD (FR); ESTEVENIN, Eric, 13560 SENAS (FR)
(74) Mandataire: Decorchemont, Audrey Véronique Christèle

(56) Documents cités:
- EP-A1- 2 224 566
- EP-A1- 2 474 400
- EP-A1- 2 476 528
- WO-A1-02/077384
- WO-A2-2008/011443
- DE-A1- 19 745 385
- FR-A1- 2 804 147
- JP-A- H0 941 538
- NL-C- 2 010 779
- NL-C1- 1 020 298
- Stichting Promotie Stipb: "Richlijnen leidingen in breedplaatvloeren", , 2008, pages 1-6, XP055442512, Extrait de l'Internet: URL:http://www.joostdevree.nl/bouwkunde2/j pgb/breedplaatvloer_8_richtlijnen_leidinge n_in_breedplaatvloeren_www_stipb_nl.pdf [extrait le 2018-01-19]
- Prefabat: "L'éLectricité préfabriquée au service des électriciens", , 2011, pages 1-15, XP055443221, Gerardmer (FR) Extrait de l'Internet: URL:http://www.prefabat.fr/spip.php?action =acceder_document&arg=129&cle=340d046b5772 63491fabf7454118c6baeead3f07&file=pdf/Pieu vres-electriques-Prefabat.pdf [extrait le 2018-01-22]
- Sommaire Page: "Batibox TM Boîtes béton pour point de centre", , 12 novembre 2008 (2008-11-12), pages 1-4, XP055443304, Extrait de l'Internet: URL:http://docdif.fr.grpleg.com/general/le grand-fr/NP-FT-GT/F00466FR-00.pdf [extrait le 2018-01-23]

## Description

L'invention concerne une prédalle comportant des moyens de repérage d'un chemin à faire emprunter à au moins une gaine telle qu'une gaine de transport d'énergie électrique ou encore une gaine de transport de fluide (gaz, eau ...) ou encore une gaine de télécommunication. L'invention concerne également un procédé de fabrication associé.

### ARRIERE PLAN TECHNOLOGIQUE DE L'INVENTION

La construction d'un bâtiment nécessite bien entendu la création d'un ou de plusieurs planchers. Pour faciliter le montage des planchers, les ouvriers ont généralement recours à des prédalles.

Les ouvriers disposent ainsi les prédalles sur un réseau de poutres d'étaiement pour former une base sur laquelle ils débutent la pose d'armatures métalliques destinées à renforcer structurellement le plancher. Les ouvriers viennent ensuite coffrer les réservations des prédalles qui forment des ouvertures traversant les prédalles.

D'autres corps de métier peuvent alors intervenir sur la base, notamment un électricien ou encore un plombier. Ils viennent en particulier repérer la base et, en fonction de différents plans de construction, coffrent aux endroits qu'ils jugent adéquats des espaces de réservation supplémentaires qui ne traversent donc pas les prédalles. Puis, ils viennent agencer les gaines comportant les câbles et les conduites nécessaires pour l'électricité, la plomberie, la communication ... sur la base en les raccordant notamment aux différents espaces de réservation supplémentaires.

Une fois le montage des gaines achevé, les ouvriers reviennent finir la construction du plancher. A cet effet, les ouvriers achèvent le montage du réseau d'armatures puis coulent la dalle de compression.

Lorsque le bâtiment est monté, différents corps de métier peuvent alors intervenir sur le plancher fini pour ouvrir les différentes réservations traversant entièrement le plancher et les différentes réservations traversant seulement la dalle de compression afin d'une part agencer un réseau vertical de canalisations au niveau des réservations traversant entièrement le plancher et d'autre part utiliser les câbles et conduites des gaines accessibles par les réservations traversant seulement la dalle de compression.

Le processus de montage d'un plancher s'avère donc relativement long et fastidieux. En particulier, il s'avère parfois compliqué pour les différents corps de métier de travailler conjointement de manière efficace.

WO 02/077384 A1 et NL 2010779 C divulguent des prédalles. La brochure "PREFABAT - L'électricité préfabriquée" divulgue le concept d'un plan de réservation pour des prédalles et la production des pieuvres étiquetées.

### OBJET DE L'INVENTION

Un but de l'invention est de proposer une prédalle permettant de simplifier et d'accélérer le montage d'un plancher. Un but de l'invention est également de proposer un procédé de fabrication associé.

### BREVE DESCRIPTION DE L'INVENTION

En vue de la réalisation de ce but, on propose une prédalle selon une des revendications 1 à 9.

Selon l'invention, la prédalle comporte des moyens de repérage d'un chemin à faire emprunter à au moins une gaine destinée à s'étendre sur la face supérieure de la prédalle, lesdits moyens de repérage étant donc agencés sur la face supérieure de la prédalle.

De la sorte, la prédalle comporte dès sa sortie d'usine une indication sur la manière de monter au moins une gaine (qui va comporter les câbles et/ou les conduites nécessaires pour l'électricité et/ou la plomberie et/ou la communication ...) à la surface de cette prédalle. La prédalle simplifie donc le montage dudit réseau.

En effet, lorsque différentes prédalles, dont au moins celle de l'invention, sont agencées pour former une base d'un plancher, les moyens de repérage indiquent directement comment agencer la ou les gaines sur le réseau de prédalles de façon optimisée.

Par ailleurs, il est envisageable que l'agencement de la ou des gaines avant le coulage d'une dalle de compression puisse ainsi se faire directement par les mêmes ouvriers ayant installé les différentes prédalles ce qui simplifie et accélère le montage d'un plancher.

Pour la présente demande, les termes de « supérieur », « inférieur », « externe » ... sont bien entendu définis relativement à la position en service de la prédalle c'est-à-dire lorsque la prédalle est agencée dans un bâtiment en construction pour former une partie de la base sur laquelle est coulée la dalle de compression.

De façon particulière, les moyens de repérage sont conformés pour indiquer les chemins à faire emprunter à au moins deux gaines appartenant chacune à un réseau de gaines différent.

Selon l'invention, les moyens de repérage comportent des moyens de guidage destinés à faciliter l'agencement des gaines sur la face supérieure de la prédalle.

De façon particulière, les moyens de guidage comportent au moins un cavalier solidarisé à la face supérieure de la prédalle et destiné à recevoir la gaine pour guider l'agencement de ladite gaine sur la face supérieure.

De façon particulière, les moyens de guidage comportent également au moins une incorporation qui est solidarisée à la prédalle de sorte à être saillante de la face supérieure de la prédalle sans s'étendre jusqu'à la face inférieure de la prédalle.

Selon l'invention, les moyens de repérage comportent des moyens de visualisation du chemin à faire emprunter à la gaine.

De façon particulière, les moyens de visualisation comportent un tracé du cheminement devant être emprunté par la gaine, ledit tracé étant représenté physiquement sur la face supérieure de la prédalle.

Selon l'invention, les moyens de repérage comportent des moyens de guidage destinés à faciliter l'agencement des gaines sur la face supérieure de la prédalle et dans laquelle les moyens de visualisation associent un signe distinctif à chaque élément des moyens de guidage.

De façon particulière, les moyens de visualisation sont agencés de sorte qu'une couleur de tracé différente soit associée à chaque type de réseau de gaines.

De façon particulière, les moyens de visualisation sont en outre conformés pour visualiser les emplacements d'au moins une future incorporation pour créer une réservation ne traversant pas la prédalle mais traversant la dalle de compression destinée à être coulée sur la prédalle.

De façon particulière, la prédalle comporte une pieuvre d'au moins la gaine, la pieuvre étant enroulée et étant solidarisée à la face supérieure de la prédalle en au moins un point à partir duquel la pieuvre est ultérieurement déroulée de sorte à ce que la gaine s'étende alors sur la face supérieure selon le chemin défini par les moyens de repérage.

De façon particulière, la gaine est colorée de la couleur associée à son tracé sur la prédalle.

L'invention concerne également un procédé de fabrication d'une prédalle telle que précitée, comportant les étapes de :
- étudier au moins un plan de construction d'un plancher dont la prédalle est destinée à faire partie,
- définir sur un plan dédié à un type de réseau de gaines donné, les chemins à faire emprunter aux gaines du réseau,
- fabriquer chaque prédalle à partir dudit plan dédié.

De façon particulière, le procédé comprend l'étape de définir plusieurs plans dédiés, à chaque plan dédié correspondant un type de réseau de gaines donné, chaque plan dédié comprenant l'emplacement des chemins à faire emprunter aux gaines du réseau considéré, le procédé comprenant en outre l'étape supplémentaire de définir sur un plan global pour l'ensemble des réseaux l'emplacement des chemins à faire emprunter aux gaines des différents réseaux, la prédalle étant fabriquée à partir du plan global.

### BREVE DESCRIPTION DES DESSINS

L'invention sera mieux comprise à la lumière de la description qui suit de modes de réalisation particuliers non limitatifs de l'invention.

Il sera fait référence aux figures ci-jointes parmi lesquelles :
- la figure 1 est une vue en perspective d'une prédalle selon un premier mode de réalisation de l'invention,
- les figures 2a à 2f illustrent schématiquement les différentes étapes de montage d'un plancher à l'aide de prédalles telle que celle illustrée à la figure 1,
- la figure 3 est une vue en perspective d'une prédalle selon un deuxième mode de réalisation de l'invention
- la figure 4 est une vue de dessus de quatre prédalles comprenant la prédalle illustrée à la figure 3 et trois autres prédalles selon le deuxième mode de réalisation de l'invention.

### DESCRIPTION DETAILLEE DE L'INVENTION

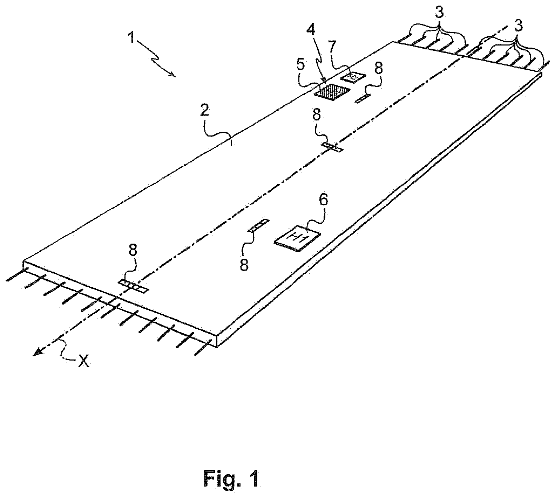

En référence à la figure 1, la prédalle 1 selon le premier mode de réalisation de l'invention comporte un corps en béton 2 s'étendant longitudinalement selon un axe X. Le corps en béton 2 comporte ainsi deux faces principales, une face supérieure et une face inférieure.

De façon connue en soi, des armatures métalliques 3 sont ancrées dans le corps en béton 2 de sorte à s'étendre également chacune longitudinalement selon l'axe X.

Selon l'invention, la prédalle 1 comporte des moyens de repérage d'un chemin à faire emprunter à au moins une gaine, lesdits moyens de repérage étant agencés sur la face supérieure de la prédalle 1.

Les moyens de repérage sont ici conformés pour indiquer les chemins à faire emprunter aux différents réseaux de gaines destinés à recouvrir la prédalle tels que les réseaux de gaines pour le transport d'énergie électrique, pour la télécommunication et pour le transport de fluide(s).

A cet effet, les moyens de repérage comportent des moyens de guidage destinés à faciliter l'agencement des gaines sur la face supérieure de la prédalle 1.

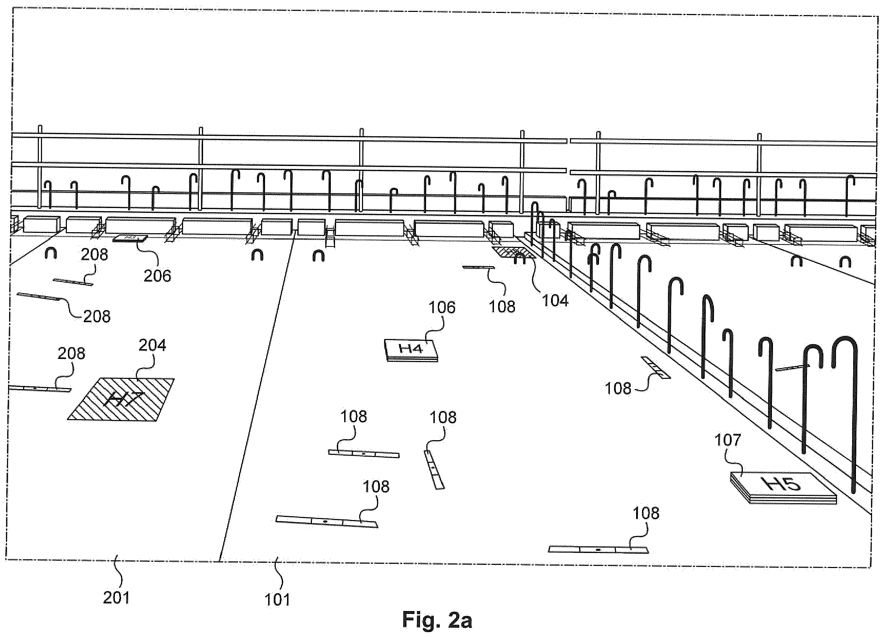

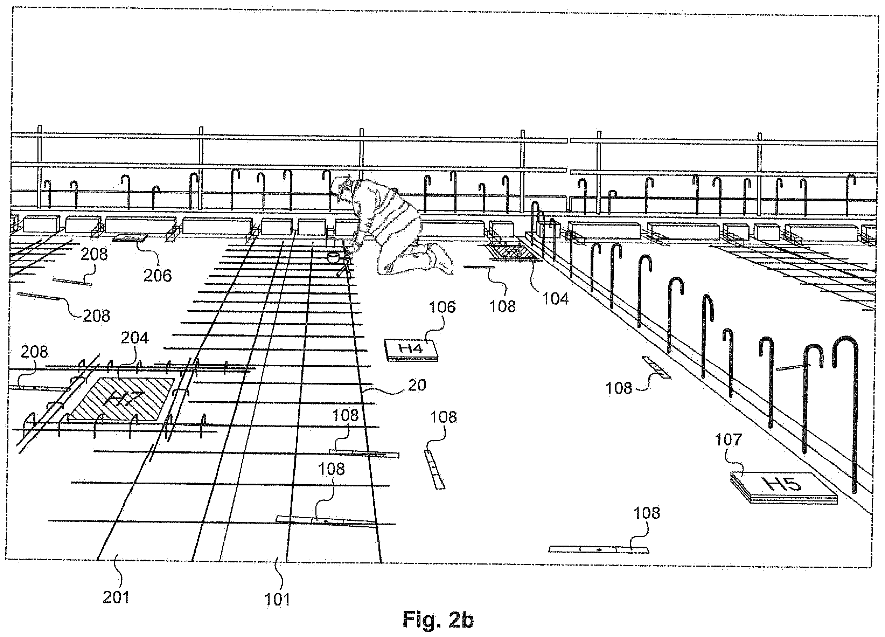

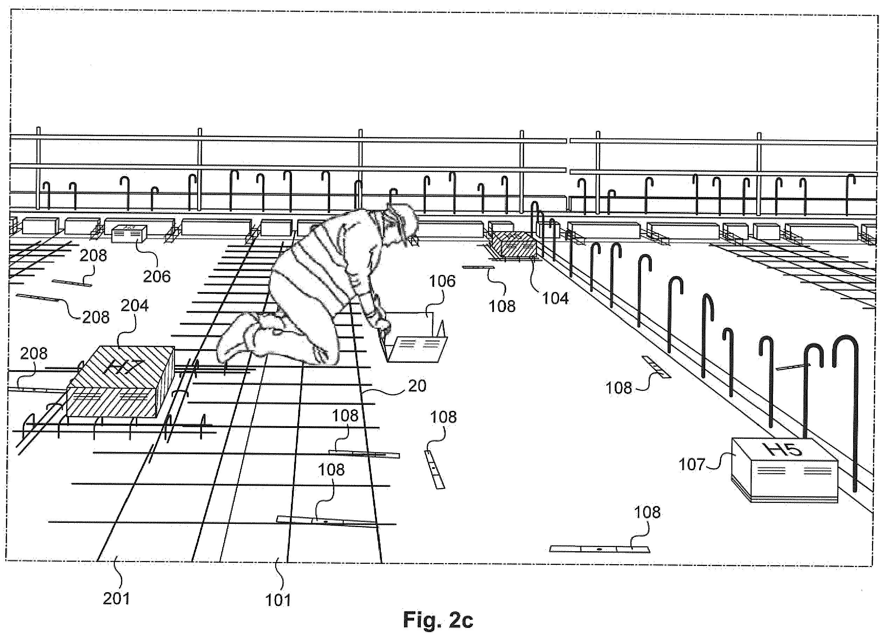

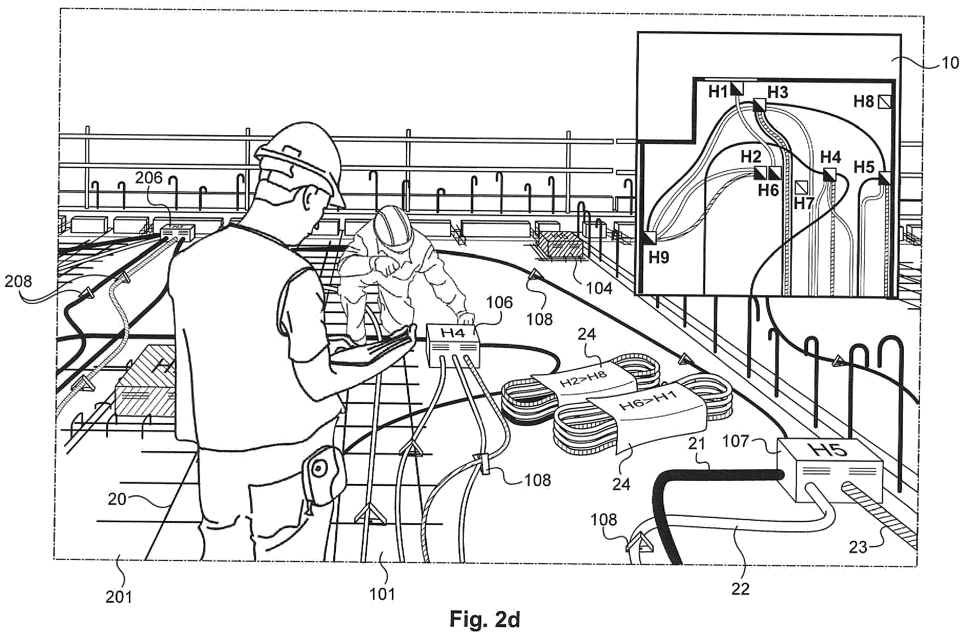

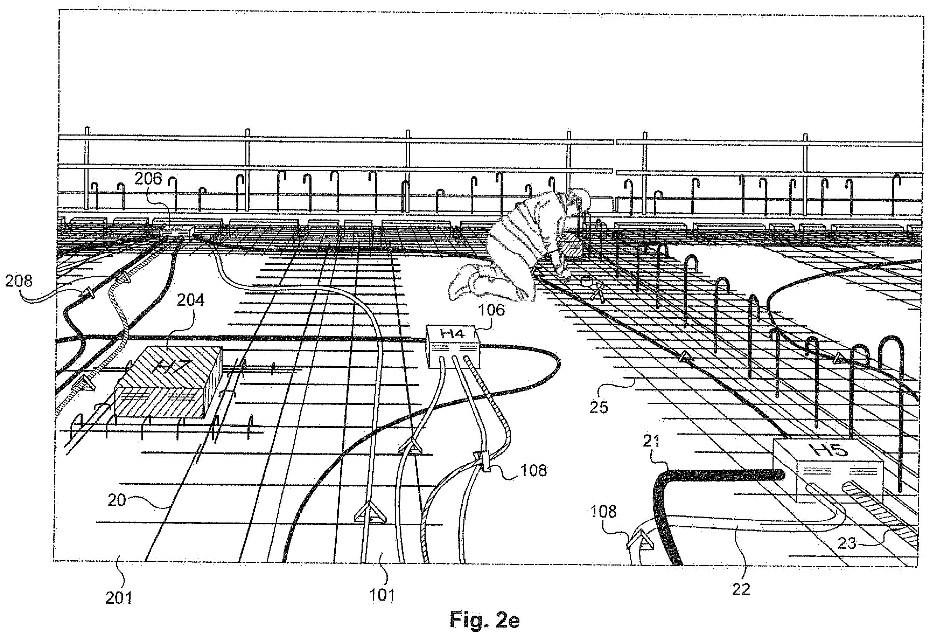

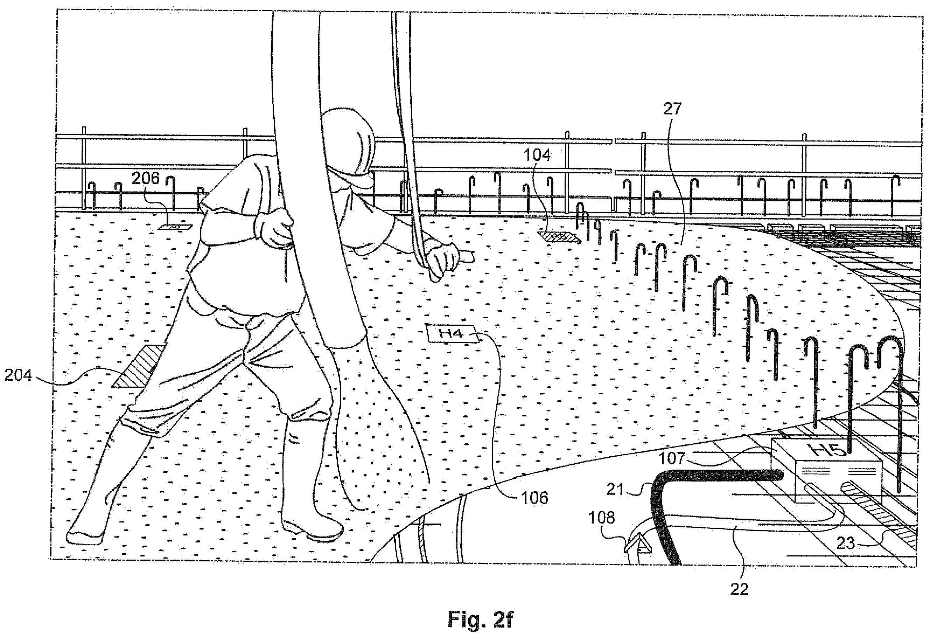

Lesdits moyens de guidage comportent par exemple plusieurs cavaliers 8 distincts agencés sur la face supérieure de la prédalle 1 à des emplacements différents et solidarisés séparément à la prédalle 1. Chaque cavalier 8 est destiné à recevoir une des gaines pour guider l'agencement de ladite gaine sur la face supérieure (comme plus visible à la figure 2^{e}).

Ceci facilite l'agencement des réseaux sur la prédalle par l'ouvrier.

Chaque cavalier 8 est ici ancré dans le corps en béton 2 de la prédalle 1.

De façon préférée, chaque cavalier 8 est conformé de sorte à pouvoir être déplié et replié.

Ainsi, tant que la prédalle 1 n'est pas en place sur le chantier, chaque cavalier 8 peut-être replié ce qui permet de manipuler et de stocker plus facilement la prédalle, ledit cavalier 8 ne dépassant alors pas ou peu de la face supérieure de la prédalle 1.

Chaque cavalier 8 est par exemple conformé de sorte à présenter une platine ancrée dans le corps en béton 2 et deux pattes articulées sur la platine en deux points opposés de la platine pour pouvoir être repliée l'une sur l'autre. Lorsque les deux pattes sont dépliées, elles viennent s'appuyer l'une sur l'autre pour former une portion de guidage de section triangulaire avec la platine. De façon préférée, les deux pattes sont munies de leurs moyens d'encliquetage de sorte que lorsqu'elles sont dépliées et appuyées l'une contre l'autre, elles viennent s'encliqueter l'une à l'autre formant ainsi une portion de guidage plus solide.

Les moyens de guidage comportent également ici deux incorporations 6, 7 qui sont solidarisées à la prédalle 1 de sorte à être saillantes de la face supérieure de la prédalle sans s'étendre jusqu'à la face inférieure de la prédalle. Les incorporations 6, 7 ne forment donc pas d'ouverture traversante dans la prédalle 1.

De la sorte, la prédalle 1 comporte directement une incorporation et ce dès sa sortie d'usine. La prédalle 1 livrée sur chantier comporte donc déjà ladite incorporation. Ladite incorporation étant destinée à être utilisée pour la mise en place des gaines sur la face supérieure de la prédalle 1, la prédalle 1 simplifie donc le montage dudit réseau.

Chacune des incorporations 6, 7 est ici ancrée dans le corps en béton 2 de la prédalle 1.

De préférence, chaque incorporation 6, 7 est conformée de sorte à servir seule de portion de coffrage pour une réservation supplémentaire au moment du coulage de la dalle de compression.

De façon préférée, chaque incorporation 6, 7 est conformée de sorte à pouvoir être dépliée et repliée.

Ainsi, tant que la prédalle 1 n'est pas en place sur le chantier, chaque incorporation 6, 7 est repliée ce qui permet de manipuler et de stocker plus facilement la prédalle 1, chaque incorporation 6, 7 ne dépassant alors pas ou peu de la face supérieure de la prédalle 1.

Chaque incorporation 6, 7 est par exemple conformée de sorte à présenter un fond ancré dans le corps en béton 2 de la prédalle 1 et quatre faces latérales articulées sur le fond pour pouvoir être repliées les unes sur les autres et sur le fond. Lorsque les quatre faces latérales sont dépliées, chaque incorporation 6, 7 forme donc un cube ouvert sur le dessus.

De façon particulière, chaque incorporation 6, 7 est conformée de sorte à présenter un couvercle fermant l'incorporation lorsqu'elle est en position dépliée. A cet effet, chaque incorporation 6, 7 comporte ici une paroi supplémentaire solidarisée aux quatre faces latérales pour fermer le haut du cube délimité par les quatre faces latérales de l'incorporation lorsque celle-ci est dépliée. Le couvercle est ici articulé sur le reste de l'incorporation 6, 7 concerné pour pouvoir laisser aisément accès à l'intérieur de l'incorporation 6, 7.

On protège ainsi l'intérieur des incorporations 6, 7 lors du coulage de la dalle de compression.

Selon l'invention, les moyens de repérage comportent des moyens de visualisation des chemins à faire emprunter aux différentes gaines. A cet effet, les moyens de visualisation associent un signe distinctif à chaque incorporation.

De la sorte, il est possible de différencier les différentes incorporations entre elles.

Par exemple, les moyens de visualisation associent un signe alphanumérique différent à chaque incorporation 6, 7.

Ceci facilite le repérage des différents éléments de la prédalle 1 à un ouvrier et donc le montage des réseaux.

Ici, chaque incorporation 6, 7 comporte son signe alphanumérique noté sur son couvercle.

De préférence, ce signe alphanumérique est répété à d'autres endroits de l'incorporation 6, 7 associée et notamment, bien que non exclusivement, à l'intérieur de l'incorporation associée 6, 7. De la sorte, même si le couvercle est retiré, il est aisé pour un ouvrier de repérer l'élément considéré.

De façon particulière, la prédalle 1 comporte en outre une réservation 4 s'étendant sur toute la hauteur du corps en béton 2 pour former une ouverture traversante dans la prédalle 1.

De préférence, cette réservation 4 est définie par un boîtier de réservation 5. Le boîtier de réservation 5 est ainsi ancré dans le corps en béton 2 de sorte à s'étendre sur toute la hauteur de la prédalle 1 pour définir la réservation 4.

Ceci facilite la création de la réservation 4 dans la prédalle 1 puisqu'un ouvrier n'a qu'à simplement agencer le boîtier de réservation 5 dans le moule de fabrication de la prédalle 1 pour directement créer la réservation 4 lors du coulage du corps en béton 2.

De façon particulière, le boîtier de réservation 5 est apte à créer non seulement un premier niveau de coffrage au moment du coulage du corps en béton 2 pour former la réserve 4 traversante dans la prédalle 1 mais est également apte à créer un deuxième niveau de coffrage au moment du coulage d'une dalle de compression du plancher.

Le boîtier de réservation 5 est ainsi conformé de sorte à comporter :
- une première portion de coffrage ancrée dans le corps en béton 2 pour définir la réserve 4, et
- une deuxième portion de coffrage s'étendant dans le prolongement de la première portion de sorte à former le deuxième niveau de coffrage, la deuxième portion n'étant donc pas ou peu ancrée dans le corps en béton 2.

De préférence, le boîtier de réservation 5 est conformé de sorte que la deuxième portion est montée articulée sur la première portion entre une position repliée et une position dépliée dans laquelle la deuxième portion s'étend dans le prolongement de la première portion pour former le deuxième niveau de coffrage.

Ainsi, tant que la prédalle 1 n'est pas en place sur le chantier, la deuxième portion du boîtier de réservation 5 est repliée ce qui permet de manipuler et de stocker plus facilement la prédalle 1, le boîtier de réservation 5 ne dépassant alors pas ou peu de la face supérieure de la prédalle 1.

De façon préférée, le boîtier de réservation 5 est conformé de sorte que dans la position repliée, la deuxième portion recouvre la réservation 4 définie par la première portion.

De la sorte, la réservation 4 n'est pas accessible tant que la deuxième portion n'a pas été volontairement dépliée ce qui rend la prédalle 1 plus sûre d'utilisation notamment lorsqu'elle est agencée sur le bâtiment en construction pour former une base du plancher.

La première portion est par exemple conformée de sorte à présenter quatre faces latérales formant un cube ouvert sur le dessus et le dessous et la deuxième portion est par exemple conformée de sorte à présenter également quatre autres faces latérales formant un cube ouvert sur le dessus et le dessous, chaque face latérale de la deuxième portion s'étendant dans le prolongement de l'une des faces latérales de la première portion.

De préférence, le boîtier de réservation 5 est conformé de sorte à présenter un fond fermant la réservation au niveau de la face inférieure de la prédalle.

Ceci permet de former directement un fond coffrant pour la réservation 4 pour le coulage de béton à l'intérieur de ladite réservation 4 une fois le plancher entièrement monté et des canalisations agencées dans ladite réservation 4.

A cet effet, la première portion est ici conformée de sorte à présenter une paroi supplémentaire solidarisée aux quatre faces latérales pour fermer le bas du cube délimité par les quatre faces latérales.

De façon particulière, le boîtier de réservation 5 est conformé de sorte à présenter un couvercle fermant le boîtier de réservation. A cet effet, la deuxième portion est ici conformée de sorte à présenter une paroi supplémentaire solidarisée aux quatre faces latérales pour fermer le haut du cube délimité par les quatre faces latérales de la deuxième portion lorsque celle-ci est dépliée et s'étend dans le prolongement de la première portion. Le couvercle est ici articulé sur le reste de la deuxième portion pour pouvoir laisser aisément accès à l'intérieur de la réservation 4.

On protège ainsi l'intérieur de la réservation 4 lors du coulage de la dalle de compression.

De façon particulière, le boîtier de réservation 5 et les incorporations 6, 7 sont conformés pour permettre de différencier les boîtiers de réservation des incorporations.

Par exemple, le boîtier de réservation 5 est dans une première couleur et les incorporations 6, 7 sont dans une deuxième couleur différente de la première couleur.

Ceci permet à un ouvrier de repérer rapidement quels éléments sont associés à une réservation traversante de la prédalle 1 et quels éléments sont associés à une réservation non traversante de la prédalle 1, que les parois de ces éléments soient repliées ou non et/ou que le couvercle de ces éléments soit en place ou non.

Par ailleurs, le boîtier de réservation 5 comporte également un signe alphanumérique qui lui est propre.

Ici, le boîtier de réservation 5 comporte son signe alphanumérique noté sur son couvercle.

De préférence, ce signe alphanumérique est répété à d'autres endroits du boîtier de réservation 5 et notamment, bien que non exclusivement, à l'intérieur du boîtier de réservation 5. De la sorte, même si le couvercle est retiré, il est aisé pour un ouvrier de repérer l'élément considéré.

Le procédé de fabrication de cette prédalle va être à présent décrit.

Au cours d'une première étape on étudie d'abord les plans de construction du plancher dont la prédalle 1 est destinée à faire partie (par exemple les plans de type EXE ou encore de type DCE, les plans d'exécution du réseau fluide, du réseau électrique ...).

On définit alors sur un plan dédié à chaque type de réseau donné, les chemins à faire emprunter aux gaines comprenant le cheminement à proprement parler ainsi que les zones de raccordement associées aux futures réservations supplémentaires non traversante. Par exemple ici on définit d'une part les chemins pour le réseau fluide et les chemins pour le réseau électrique.

Puis on définit sur un plan global pour l'ensemble des réseaux les chemins à faire emprunter aux gaines (comprenant le cheminement à proprement parler ainsi que les zones de raccordement associées aux futures réservations supplémentaires non traversante) de sorte à ce que l'agencement d'un réseau particulier ne gêne pas les autres réseaux. Ceci permet donc de déterminer à la fois où placer les incorporations 6, 7 et où placer les cavaliers 8 pour qu'ils dirigent efficacement les différentes gaines sur la prédalle 1. De préférence, on détermine aussi à partir de ce plan global où agencer les boîtiers de réservation 4.

Il ne reste alors plus qu'à fabriquer chaque prédalle 1 du plan global en y intégrant incorporations, boîtiers de réservation et cavaliers en fonction du plan global.

De préférence, le procédé comporte également l'étape de créer une carte dédiée aux prédalles (visible à la figure 2d) et de livrer cette carte avec les différentes prédalles.

Cette carte est configurée de sorte à symboliser les prédalles et les différents incorporations et boîtiers de réservation. Pour une meilleure visibilité, les incorporations et les boîtiers de réservation sont schématisés sur le plan par une forme géométrique de la couleur de l'élément concerné, le signe alphanumérique de l'élément concerné étant également noté sur le plan à côté de la forme géométrique.

En variante ou en complément on peut également livrer le plan global avec les prédalles qui comprend d'autres informations importantes.

Un procédé de montage du plancher à partir des prédalles précitées va être à présent détaillé en référence aux figures 2a à 2f.

Comme illustré à la figure 2a, l'ouvrier agence les prédalles 101, 201 sur un réseau de poutres d'étaiement (non visible ici).

Ainsi, sur le site de construction même, l'ouvrier n'a pas besoin d'étudier les plans de construction de façon détaillée puisqu'il lui suffit d'agencer les différentes prédalles correctement pour que toutes les incorporations 106, 107, 206, les cavaliers 108, 208 et mêmes les boîtiers de réservation 104, 204 se retrouvent directement bien agencés.

Au cours d'une deuxième étape illustrée à la figure 2b, l'ouvrier agence une partie des armatures métalliques 20 de soutien structurel du plancher.

Il est aidé en cette tâche par le fait que les différents incorporations 106, 107, 206 et boîtiers de réservation 104, 204 nécessaires sont déjà présents. L'ouvrier n'a donc pas à se préoccuper d'un éventuel placement futur d'autres éléments de ce genre comme cela pouvait être le cas avec les procédés de l'art antérieur.

Au cours d'une troisième étape illustrée à la figure 2c, l'ouvrier procède au dépliage de toutes les incorporations 106, 107, 206 et boîtiers de réservation 104, 204. Ceci permet de préparer les incorporations et les boîtiers de réservation au coulage de la dalle de compression.

On note que jusqu'à présent toutes les étapes sont réalisées par un même corps de métier.

Comme illustré à la figure 2d, les différentes gaines 21, 22, 23 (comportant les câbles et les conduites nécessaires pour l'électricité, la plomberie ... et dont une partie seulement est référencée à la figure 2d) sont agencées sur les prédalles et raccordées aux incorporations. Les gaines 21, 22, 23 sont avantageusement liées aux prédalles et guidées dans leur cheminements entre les différentes incorporations par les cavaliers 108, 208 qui sont dépliés et repliés autour des gaines au fur et à mesure de la mise en place des gaines.

De préférence, on configure la carte dédiée 10 de sorte qu'elle symbolise également les différentes gaines 21, 22, 23.

De façon préférée, les gaines 21, 22, 23 sont d'une couleur différente selon le type de câbles et/ou de conduites que la gaine concernée contient. Par exemple les gaines 23 dédiées à l'électricité sont rouges, les gaines 22 dédiées à l'eau sont bleues, les gaines 21 dédiées à la l'électricité sont noires ... De préférence, la carte dédiée 10 symbolise donc de façon correspondante les différentes gaines par leur couleur ce qui facilite encore davantage la lecture de la carte dédiée 10.

De la sorte, la carte dédiée 10 ainsi que la couleur des gaines 21, 22, 23 et la couleur et le signe alphanumérique des différents incorporations 106, 107, 206 et boîtiers de réservation 104, 204 permettent très facilement de procéder à l'installation du réseau de gaines. On note que cette étape peut ainsi également être mise en œuvre par le même corps de métier que pour les étapes précédentes au contraire des procédés de l'art antérieur nécessitant l'intervention de différents corps de métier.

De façon particulière, chaque gaine comporte également un symbole associé aux incorporations que la gaine concernée est censé relier. Ici, chaque symbole reprend les signes alphanumériques des incorporations que la gaine associée audit symbole est censé relier. Par exemple, une gaine devant raccorder l'incorporation noté H1 et l'incorporation noté H2 comporte le symbole H1-H2.

Ce symbole est par exemple imprimé sur la gaine ou encore porté par une étiquette solidarisée à la gaine.

Ceci facilite encore davantage l'installation du réseau de gaines sur les prédalles.

De préférence, les différentes gaines sont livrées sur chantier avec les prédalles en étant regroupées par couleur dans un même paquet et/ou en étant regroupées par chemin à emprunter dans un même paquet 24 (c'est-à-dire que toutes les gaines devant raccorder l'incorporation notée H1 avec l'incorporation notée H2 sont livrées sur chantier groupés dans un même paquet). De façon préférée, chaque paquet comporte alors une mention de ladite couleur et ou dudit chemin à emprunter (par exemple la mention H1-H2 pour le paquet comprenant les gaines devant raccorder l'incorporation notée H1 avec l'incorporation notée H2).

Ceci facilite la manutention des différentes gaines. Ceci facilite en outre encore davantage l'installation du réseau de gaines sur les prédalles.

Au cours de la cinquième étape illustrée à la figure 2e, l'ouvrier achève le montage des armatures métalliques 25 de soutien structurel du plancher.

Enfin au cours de la sixième étape représentée à la figure 2f, l'ouvrier vient couler la dalle de compression 27 jusqu'à hauteur des couvercles des différents incorporations et boîtiers de réservation.

Ces deux autres étapes sont encore mises en œuvre par le même corps de métier.

Une fois le béton pris, le plancher est donc créé. Les boîtiers de réservation 104, 204 ont ainsi permis de créer des ouvertures traversant le plancher et les incorporations 106, 107, 206 des ouvertures traversant seulement la dalle de compression 27 et permettant d'avoir accès aux différentes gaines qui y sont raccordées. Une fois le plancher achevé, il est donc possible d'ouvrir les différentes boîtiers et incorporations pour accéder à l'intérieur desdits boîtiers et incorporations et permettre l'agencement des canalisations verticales ou encore d'utiliser les gaines raccordées à différentes incorporations.

De la sorte, il s'avère donc simple et rapide de monter un plancher. En particulier, seul un même corps de métier peut intervenir pour créer ledit plancher incluant l'étape de mise en place des gaines.

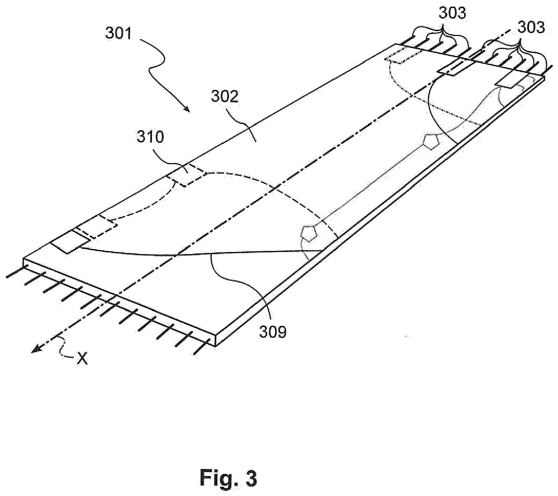

En référence à la figure 3, la prédalle 301 selon le deuxième mode de réalisation de l'invention comporte un corps en béton 302 s'étendant longitudinalement selon un axe X. Le corps en béton 302 comporte ainsi deux faces principales, une face supérieure et une face inférieure.

De façon connue en soi, des armatures métalliques 303 sont ancrées dans le corps en béton 302 de sorte à s'étendre également chacune longitudinalement selon l'axe X.

Selon l'invention, la prédalle 301 comporte des moyens de repérage d'un chemin à faire emprunter à au moins une gaine, lesdits moyens de repérage étant agencés sur la face supérieure de la prédalle 301.

Les moyens de repérage sont ici conformés pour indiquer les chemins à faire emprunter aux différents réseaux de gaines destinés à recouvrir la prédalle tels que les réseaux de gaines pour le transport d'énergie électrique, pour la télécommunication et pour le transport de fluide(s).

A cet effet, les moyens de repérage comportent des moyens de visualisation des chemins à faire emprunter à différentes gaines. Lesdits moyens de visualisation comportent ici des tracés 309 (dont un seul est reférencé ici) des cheminements devant être empruntés par les différentes gaines qui sont directement représentés sur la prédalle 301.

De la sorte, il s'avère bien plus simple pour un ouvrier de placer correctement sur chantier les différents réseaux de gaines. En particulier, il n'a pas besoin de réfléchir à l'agencement d'un premier réseau de gaines (par exemple pour l'électricité) qui ne gênerait pas l'agencement ultérieur d'un deuxième réseau de gaines (par exemple pour l'eau).

Les tracés 309 sont par exemple peints sur la prédalle.

De préférence, les moyens de visualisation sont agencés de sorte qu'une couleur de tracé soit associée à chaque type de réseau de gaines (eau, gaz, électricité, communication ...) .

Il s'avère ainsi encore plus simple pour un ouvrier d'agencer les différents réseaux de gaines.

De préférence, les gaines elles-mêmes sont colorées de la couleur associée sur la prédalle 301 ce qui simplifie encore l'agencement des différents réseaux.

De façon particulière, les moyens de visualisation sont en outre conformés pour représenter sur la prédalle les emplacements 310 (dont un seul est reférencé ici) de futures incorporations pour créer des réservations ne traversant pas la prédalle mais traversant la dalle de compression destinée à être coulée sur la prédalle.

De la sorte, l'ouvrier ne se préoccupe ni du tracé à faire emprunter aux gaines ni de leur raccordement aux réservations. Ceci simplifie encore davantage le travail de l'ouvrier.

De préférence, les moyens de visualisation sont agencés de sorte qu'une même couleur soit associée pour les tracés et les emplacements de chaque type de réseau de gaines (eau, gaz, électricité, communication ...).

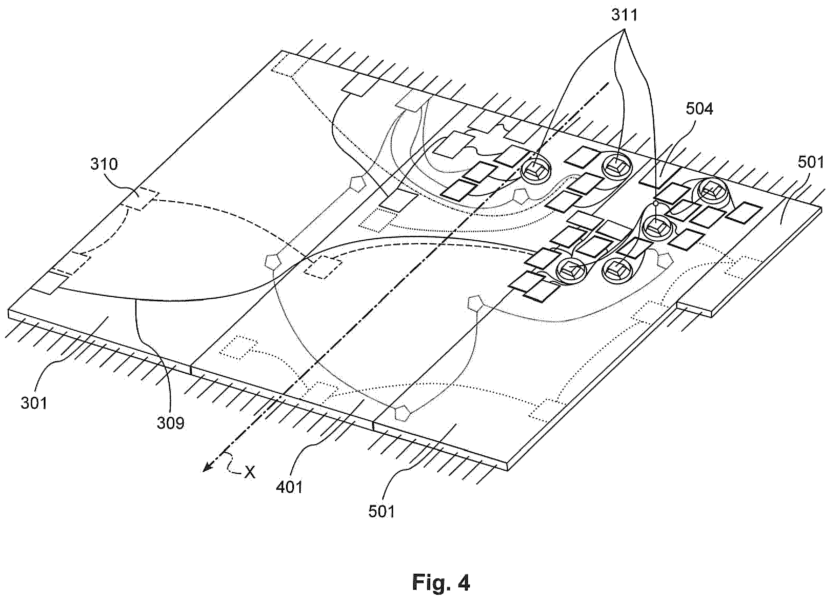

La figure 4 illustre un agencement de quatre prédalles selon le deuxième mode de réalisation dont la prédalle 301 qui vient d'être décrit. Les quatre prédalles 301, 401, 501, 601 sont ici agencées sur un réseau de poutres d'étaiement au niveau où le plancher doit être créé.

Chaque prédalle 301, 401, 501, 601 comprend ainsi les tracés des cheminements à faire emprunter par les différents réseaux de gaines ainsi que les tracés des emplacements des réservations supplémentaires.

Les moyens de visualisation sont conformés pour assurer une continuité du repérage des chemins des différents réseaux de gaines. En particulier ici, les différentes couleurs associées aux différents réseaux de gaines sont identiques pour chaque prédalle 301, 401, 501, 601. En outre, les tracés se poursuivent d'une prédalle à une autre.

De la sorte, l'agencement des réseaux de gaines s'avère réellement facile pour un ouvrier une fois les différentes prédalles 301, 401, 501, 601 en place pour former la base du plancher puisqu'il peut visualiser d'un seul coup comment les différents réseaux de gaines vont s'agencer sur ladite base.

De préférence, les différents réseaux de gaines sont livrés en pieuvres 311 sur le chantier en même temps que les prédalles 301, 401, 501, 601.

On rappelle qu'une pieuvre est un ensemble de gaines ramifiées fabriquée en usine afin d'être déroulée sur chantier.

Dans le cas présent, une première pieuvre comporte le réseau de gaines des quatre prédalles 301, 401, 501, 601 associé au transport d'énergie électrique, une deuxième pieuvre comporte le réseau de gaines des quatre prédalles 301, 401, 501, 601 associé au transport de l'eau etc....

Ceci évite que les gaines n'arrivent en vrac sur chantier.

Ici chaque pieuvre 311 comporte en outre les incorporations directement agencés dans les réseaux de gaines.

De façon préférée, au moment de la livraison des prédalles, chaque pieuvre 311 est enroulée et est solidarisée à la face supérieure de la prédalle associée en au moins un point à partir duquel la pieuvre est ultérieurement déroulée.

De la sorte, gaines et prédalles sont solidaires dès la livraison sur chantier ce qui facilite la mise en place des réseaux de gaines. En particulier, l'ouvrier n'a plus qu'à dérouler les réseaux de gaines à partir du point d'attache de chaque pieuvre en suivant les tracés des prédalles et en disposant les incorporations au niveau des emplacements des réservations ultérieures. Puis il n'a plus qu'à coffrer lesdits emplacements.

Pour faciliter la mise en place des incorporations, les incorporations comme la prédalle comportent des moyens d'emboîtement mutuels au niveau des emplacements. De la sorte, au moment où l'ouvrier déroule la pieuvre, il n'a qu'à simplement encliqueter l'incorporation sur la prédalle pour achever le montage du réseau.

Le procédé de fabrication de ces prédalles va être à présent décrit.

Au cours d'une première étape on étudie d'abord les plans de construction du plancher dont la prédalle 301 est destinée à faire partie (par exemple les plans de type EXE ou encore de type DCE, les plans d'exécution du réseau fluide, du réseau électrique ...).

On définit alors sur un plan dédié à chaque type de réseau donné les chemins à faire emprunter aux gaines comprenant le cheminement à proprement parler ainsi que les zones de raccordement associées aux futures réservations supplémentaires non traversante. Par exemple ici on définit d'une part les chemins pour le réseau fluide et les chemins pour le réseau électrique.

Puis on définit sur un plan global pour l'ensemble des réseaux de gaines, les chemins à faire emprunter aux gaines (comprenant le cheminement à proprement parler ainsi que les zones de raccordement associées aux futures réservations supplémentaires non traversante) de sorte à ce que l'agencement d'un réseau particulier ne gêne pas les autres réseaux.

On procède alors à la définition des pieuvres 311 prêtes à dérouler pour chaque prédalle au vu du plan global. On peut également si besoin définir l'emplacement des boîtiers de réservation 504 comme dans le premier mode de réalisation.

Il ne reste alors plus qu'à fabriquer chaque prédalle du plan global et à y dessiner (à l'aide de peintures par exemple) les différents chemins (cheminement et emplacement) des différents réseaux. On fabrique également les pieuvres 311 définies précédemment avant d'attacher chaque pieuvre 311 à la prédalle associée.

Un procédé de montage du plancher à partir de ces prédalles va être à présent détaillé.

L'ouvrier agence les prédalles 301, 401, 501, 601 sur un réseau de poutres d'étaiement.

L'ouvrier agence ensuite une partie des armatures métalliques de soutien structurel du plancher.

L'ouvrier procède alors au dépliage des différentes pieuvres afin d'agencer les gaines et les incorporations selon les indications des moyens de visualisation.

Puis, l'ouvrier achève le montage des armatures métalliques de soutien structurel du plancher.

Enfin, l'ouvrier vient couler la dalle de compression jusqu'à hauteur des couvercles des différents incorporations.

Toutes ces étapes sont ainsi mises en œuvre par le même corps de métier.

Une fois le béton pris, le plancher est donc créé. Les éventuels boîtiers de réservation ont ainsi permis de créer des ouvertures traversant le plancher et les incorporations des ouvertures traversant seulement la dalle de compression 27 et permettant d'avoir accès aux différentes gaines qui y sont raccordées. Une fois le plancher achevé, il est donc possible d'ouvrir les différents boîtiers et incorporations pour accéder à l'intérieur desdits boîtiers et incorporations et permettre l'agencement des canalisations verticales ou encore d'utiliser les câbles et/ou les conduites présentes dans les gaines raccordées aux différentes incorporations.

De la sorte, il s'avère donc simple et rapide de monter un plancher. En particulier, seul un même corps de métier peut intervenir pour créer ledit plancher incluant l'étape de mise en place des gaines.

L'invention n'est pas limitée à ce qui vient d'être décrit, mais bien au contraire englobe toute variante entrant dans le cadre défini par les revendications.

En particulier, des caractéristiques des différents modes de réalisation pourront être combinées entre elles. Par exemple, une même prédalle pourra à la fois comporter les moyens de guidage du premier mode de réalisation avec les moyens de visualisation du deuxième mode de réalisation.

Les incorporations et/ou les moyens de guidage et/ou les cavaliers pourront ne pas être ancrés dans le corps en béton de la prédalle mais pourront être seulement solidarisés à ce corps en béton par exemple par vissage, par collage, par emboîtement à des moyens déjà ancrés dans le corps en béton ...

Les boîtiers de réservation et/ou les incorporations et/ou les moyens de guidage pourront ne pas être dépliables.

Les boîtiers de réservation et/ou les incorporations pourront ne pas comporter de fond et/ou de couvercle. Le couvercle pourra être indépendant du reste du boîtier de réservation considéré ou du reste de l'incorporation considérée et être par exemple emboîté ultérieurement sur le boîtier de réservation ou l'incorporation considéré.

Les boîtiers de réservation et/ou les incorporations pourront ne pas suffire seuls à créer des portions de coffrage lors du coulage de la dalle de compression. Par exemple, les boîtiers de réservation et/ou les incorporations pourront comporter des bordures sur lesquelles des portions de coffrage seront emboîtables ce qui permettra d'avoir un coffrage simple et rapide dudit incorporation.

Les boîtiers de réservation pourront ne servir de portion de portion de coffrage que pour former la réservation dans la prédalle ou que pour former la réservation dans la dalle de compression (la réservation dans la prédalle étant alors formée autrement que par le boîtier de réservation associé).

Les différentes étapes du procédé pourront être mises en œuvre dans un ordre différent de ce qui a été indiqué. Par exemple on pourra déjà commencer à monter les armatures avant de déplier les différentes incorporations et les éventuels boîtiers de réservation.

Les moyens de visualisation du chemin à faire emprunter à la gaine pourront seulement représenter les emplacements des futures incorporations sans les cheminements des gaines et inversement.

## Revendications

1. Prédalle comportant un corps en béton (2 ; 302) comportant une face supérieure et une face inférieure, la prédalle étant **caractérisée en ce qu'**elle comporte des moyens de repérage (8, 108, 208 ; 309, 310) d'un chemin à faire emprunter à au moins une gaine, lesdits moyens de repérage étant agencés sur la face supérieure de la prédalle et étant conformés pour indiquer les chemins à faire emprunter à au moins deux gaines appartenant chacune à un réseau de gaines différent, dans lequel les moyens de repérage comportent des moyens de guidage (8, 108, 208, 6, 7, 106, 107, 206) destinés à faciliter l'agencement des gaines sur la face supérieure de la prédalle, ladite prédalle étant **caractérisée en ce que** les moyens de repérage comportent également des moyens de visualisation (309, 310) du chemin à faire emprunter à la gaine, **en ce que** les moyens de visualisation associent un signe distinctif à chaque élément des moyens de guidage, et **en ce que** la prédalle comporte ainsi dès sa sortie d'usine une indication sur la manière de monter la au moins une gaine à la surface de la prédalle.

2. Prédalle selon l'une des revendications précédentes, dans laquelle les moyens de repérage comportent des moyens de guidage (8, 108, 208, 6, 7, 106, 107, 206) destinés à faciliter l'agencement des gaines sur la face supérieure de la prédalle.

3. Prédalle selon la revendication 2, dans laquelle les moyens de guidage comportent au moins un cavalier (8, 108, 208) solidarisé à la face supérieure de la prédalle et destiné à recevoir la gaine pour guider l'agencement de ladite gaine sur la face supérieure.

4. Prédalle selon l'une des revendications 2 ou 3, dans laquelle les moyens de guidage comportent également au moins une incorporation (6, 7, 106, 107, 206) qui est solidarisée à la prédalle de sorte à être saillante de la face supérieure de la prédalle sans s'étendre jusqu'à la face inférieure de la prédalle.

5. Prédalle selon l'une des revendications précédentes, dans laquelle les moyens de visualisation comportent un tracé (309) du cheminement devant être emprunté par la gaine, ledit tracé étant représenté physiquement sur la face supérieure de la prédalle.

6. Prédalle selon la revendication 5, dans laquelle les moyens de visualisation (309, 310) sont agencés de sorte qu'une couleur de tracé différente soit associée à chaque type de réseau de gaines.

7. Prédalle selon l'une des revendications précédentes, dans laquelle les moyens de visualisation (309, 310) sont en outre conformés pour visualiser au moins un emplacement d'une future incorporation pour créer une réservation ne traversant pas la prédalle mais traversant la dalle de compression destinée à être coulée sur la prédalle.

8. Prédalle selon l'une des revendications précédentes, comportant une pieuvre (311) d'au moins la gaine, la pieuvre étant enroulée et étant solidarisée à la face supérieure de la prédalle en au moins un point à partir duquel la pieuvre est ultérieurement déroulée de sorte à ce que la gaine s'étende alors sur la face supérieure selon le chemin défini par les moyens de repérage.

9. Prédalle selon la revendication 5 et la revendication 8, dans laquelle la gaine est colorée de la couleur associée à son tracé sur la prédalle.

10. Procédé de fabrication d'une prédalle selon l'une des revendications précédentes, comportant les étapes de :
- étudier au moins un plan de construction d'un plancher dont la prédalle est destinée à faire partie,
- définir sur un plan dédié à un type de réseau de gaines donné les chemins à faire emprunter aux gaines du réseau,
- fabriquer chaque prédalle à partir dudit plan dédié.

11. Procédé selon la revendication 10, comprenant l'étape de définir plusieurs plans dédiés, à chaque plan dédié correspondant un type de réseau de gaines donné, chaque plan dédié comprenant l'emplacement des chemins à faire emprunter aux gaines du réseau considéré, le procédé comprenant en outre l'étape supplémentaire de définir sur un plan global, pour l'ensemble des réseaux, l'emplacement des chemins à faire emprunter aux gaines des différents réseaux, la prédalle étant fabriquée à partir du plan global.

## Patentansprüche

1. Elementplatte, umfassend einen Betonkörper (2; 302), der eine Oberseite und eine Unterseite aufweist, umfassend Mittel (8, 108, 208; 309, 310) zum Anzeigen eines Wegs, der von mindestens einem Kanal einzuschlagen ist, wobei die Anzeigemittel auf der Oberseite der Elementplatte angeordnet sind, wobei die Elementplatte **dadurch gekennzeichnet ist, dass** die Anzeigemittel so ausgebildt sind, dass sie die Wege anzeigen, die von mindestens zwei Kanälen einzuschlagen sind, die jeweils zu einem anderen Kanalnetz gehören, wobei die Anzeigemittel ferner Führungsmittel (8, 108, 208, 6, 7, 106, 107, 206) umfassen, die dazu bestimmt sind, die Anordnung von Kanälen auf der Oberseite der Elementplatte zu erleichtern, die Anzeigemittel gleichermaßen Mittel (309, 310) zum Visualisieren eines von dem Kanal einzuschlagenden Wegs umfassen, die Visualisierungsmittel jedem Element der Führungsmittel ein Unterscheidungszeichen zuordnen, die Elementplatte auf diese Weise ab Werk eine Angabe darüber aufweist, wie der mindestens eine Kanal auf der Oberfläche der Elementplatte zu montieren ist.

2. Elementplatte nach einem der vorhergehenden Ansprüche, bei der die Anzeigemittel Führungsmittel (8, 108, 208, 6, 7, 106, 107, 206) umfassen, die dazu bestimmt sind, die Anordnung von Kanälen auf der Oberseite der Elementplatte zu erleichtern.

3. Elementplatte nach Anspruch 2, bei der die Führungsmittel mindestens eine Brücke (8, 108, 208) umfassen, die an der Oberseite der Elementplatte befestigt und dazu bestimmt ist, den Kanal aufzunehmen, um die Anordnung des Kanals auf der Oberseite zu führen.

4. Elementplatte nach Anspruch 2 oder 3, bei der die Führungsmittel eine Inkorporation (6, 7, 106, 107, 206) umfassen, die derart an der Elementplatte befestigt ist, dass sie aus der Oberseite der Elementplatte herausragt, ohne sich bis zur Unterseite der Elementplatte zu erstrecken.

5. Elementplatte nach einem der vorhergehenden Ansprüche, bei der die Visualisierungsmittel eine Voranschreitspur (309) aufweisen, der der Kanal folgen soll, wobei die Spur physisch auf der Oberseite der Elementplatte dargestellt ist.

6. Elementplatte nach Anspruch 5, bei der die Visualisierungsmittel (309, 310) so angeordnet sind, dass jedem Typ von Kanalnetz eine unterschiedliche Spurfarbe zugeordnet ist.

7. Elementplatte nach einem der vorhergehenden Ansprüche, bei der die Visualisierungsmittel (309, 310) ferner ausgebildet sind, um mindestens einen Einbauort einer zukünftigen Inkorporation zu visualisieren, um eine Reservierung zu erzeugen, die die Elementplatte nicht überquert, sondern die Druckplatte überquert, die dazu bestimmt ist, auf die Elementplatte gegossen zu werden.

8. Elementplatte nach einem der vorhergehenden Ansprüche, umfassend eine Krakenstruktur (311) mindestens des Kanals, wobei die Krakenstruktur aufgewickelt und an der Oberseite der Elementplatte an mindestens einem Punkt befestigt ist, von dem aus die Krakenstruktur anschließend so abgewickelt wird, dass sich der Kanal dann längs des durch die Anzeigemittel definierten Weges auf der Oberseite erstreckt.

9. Elementplatte nach Anspruch 5 und Anspruch 8, bei der der Kanal mit der Farbe gefärbt ist, die seiner Spur auf der Elementplatte zugeordnet ist.

10. Verfahren zum Herstellen einer Elementplatte nach einem der vorhergehenden Ansprüche, umfassend die Schritte:
- Studieren wenigstens eines Plans zur Konstruktion einer Decke, wobei die Elementplatte als Teil davon vorgesehen ist,
- Definieren auf einem Plan, der speziell für eine gegebene Art von Kanalnetz vorgesehen ist, die Wege, die von dem Kanal des Netzes einzuschlagen sind,
- Herstellen jeder Elementplatte ausgehend von dem speziellen Plan.

11. Verfahren nach Anspruch 10, umfassend den Schritt des Definierens mehrerer spezieller Pläne, wobei jeder spezielle Plan einem gegebenen Typ von Kanalnetz entspricht, jeder spezielle Plan die Lage von Wegen aufweist, die von den Kanälen des betrachteten Netzes einzuschlagen sind, wobei das Verfahren ferner den zusätzlichen Schritt umfasst, auf einem Gesamtplan für die Gesamtheit der Netze die Lage von Wegen zu definieren, die von den Kanälen verschiedener Netze einzuschlagen sind, wobei die Elementplatte ausgehend von dem Gesamtplan hergestellt wird.

## Claims

1. Pre-slab including a concrete body (2; 302) having an upper face and a lower face, including identifying means (8, 108, 208; 309, 310) for identifying a path to be taken by at least one duct, said identifying means being arranged on the upper face of the pre-slab, the pre-slab being **characterized in that** identifying means are shaped to indicate the paths to be taken by at least two ducts each belonging to a different duct network, in which the identifying means include guide means (8, 108, 208, 6, 7, 106, 107, 206) for facilitating the arrangement of the ducts on the upper face of the pre-slab, the identifying means also including means (309, 210) for displaying the path to be taken by the duct, **in that** the display means associate a distinctive sign with each element of the guide means, and **in that** the pre-slab therefore when it leaves the factory includes an indication of how to mount the at least one duct on the surface of the pre-slab.

2. Pre-slab according to claim 1, wherein the identifying means include guide means (8, 108, 208, 6, 7, 106, 107, 206) for facilitating the arrangement of the ducts on the upper face of the pre-slab.

3. Pre-slab according to claim 2, wherein the guide means include at least one jumper (8, 108, 208) secured to the upper face of the pre-slab and intended to receive the duct to guide the arrangement of said duct on the upper face.

4. Pre-slab according to either one of claims 2 or 3, wherein the guide means also include at least one incorporation (6, 7, 106, 107, 206) that is secured to the pre-slab so as to protrude from the upper face of the pre-slab without extending as far as the underside of the pre-slab.

5. Pre-slab according to any one of the preceding claims, wherein the display means include a trace (309) of the path to be taken by the duct, said trace being physically represented on the upper face of the pre-slab.

6. Pre-slab according to claim 5, wherein the display means (309, 210) are such that a different trace colour is associated with each type of duct network.

7. Pre-slab according to any one of the preceding claims, wherein the display means (309, 210) are further shaped to display at least one location of a future incorporation to create a reservation not passing through the pre-slab but passing through the compression slab intended to be cast on the pre-slab.

8. Pre-slab according to any one of the preceding claims, including a prefabricated duct network (311) consisting of at least the duct, the prefabricated duct network being rolled up and secured to the upper face of the pre-slab at at least one point from which the prefabricated duct network is subsequently unrolled so that the duct then extends on the upper face along the path defined by the identifying means.

9. Pre-slab according to claim 5 and claim 8, wherein the duct is coloured the colour associated with its trace on the pre-slab.

10. Method for manufacturing a pre-slab according to any one of the preceding claims, including the steps of:
- studying at least one construction plan of a floor of which the pre-slab is intended to be part,
- defining on a plan dedicated to a given type of duct network the paths to be taken by the ducts of the network,
- manufacturing each pre-slab based on said dedicated plan.

11. Method according to claim 10, including the step of defining a plurality of dedicated plans, each dedicated plan corresponding to a given type of duct network, each dedicated plan including the location of the paths to be taken by the ducts of the network concerned, the method further including the additional step of defining on an overall plan for all the networks the location of the paths to be taken by the ducts of the various networks, the pre-slab being manufactured according to the overall plan.
